# EUROPEAN PATENT SPECIFICATION

(11) **EP 2 531 083 B1**
(45) Date of publication and mention of the grant of the patent: **19.03.2014**
(21) Application number: 11706350.3
(22) Date of filing: 31.01.2011
(51) Int. Cl.: A47J 31/44

(54) **MACHINE FOR THE PREPARATION OF A BEVERAGE**
MASCHINE ZUR HERSTELLUNG EINES GETRÄNKS
MACHINE DE PRÉPARATION DE BOISSON

(30) Priority: 02.02.2010 IT TO20100074
(43) Date of publication of application: 12.12.2012
(73) Proprietor: Luigi Lavazza S.p.A., 10154 Torino (IT)
(72) Inventor: ICARDI, Danilo, 10137 Torino (IT)
(74) Representative: Quinterno, Giuseppe
(86) International application number: PCT/IB2011/050412
(87) International publication number: WO 2011/095926

(56) References cited:
- EP-A1- 1 688 072
- WO-A1-2007/137937
- WO-A2-2008/015514

## Description

The present invention relates to a machine for the preparation of a beverage.

More specifically, the invention relates to a machine for the preparation of a beverage, in particular espresso coffee, using pre-packaged doses, for example in cartridges or capsules, of a substance for the preparation of the beverage, in particular roasted or ground coffee, of the kind defined in the preamble of claim 1.

A machine of that kind is disclosed in WO 2008/015514A.

It is an object of the present invention to provide such a machine which allows a user to prepare a beverage, in particular Italian-style espresso coffee, in an extremely easy manner, simulating the coffee preparation methods employed by the traditional professional machines, such as those in bars, which are provided with dose-carrier assemblies that can be engaged in the machine body before a respective dose of ground coffee is loaded and can be disengaged from the machine body after the beverage thus prepared has been dispensed.

This and other objects are achieved according to the invention by a machine having the features defined in claim 1.

In one embodiment, the dose-carrier assembly is engageable/disengageable in/from a movable carriage which is provided with said first or second guide means, coupled to the second or first guide means of the fixed structure; in the engaged condition the dose-carrier assembly being movable, together with the carriage, with respect to the fixed structure between said coupling and uncoupling positions.

Said slits or grooves may have respective openings allowing said protruding formations to pass therethrough and disengage therefrom, for disengaging the dose-carrier assembly from said fixed structure.

In a specific embodiment, said protruding formations are associated with the movable dose-carrier assembly, and said slits or grooves are provided in a pair of parallel facing plates which are fixed to said fixed structure and extend at least in part below the dispensing head.

Further features and advantages of the invention will become apparent in the following detailed description, which is given purely by way of non-restrictive example, with reference to the appended drawings, in which:
Figure 1 is a partly sectional side view of a machine according to the present invention, shown with the dose-carrier assembly in the lowered position;
Figure 2 is analogous to that shown in Figure 1, and shows the machine with the dose-carrier assembly in the raised position;
Figure 3 is a virtually frontal perspective view of parts of the machine shown in the preceding figures, with the dose-carrier assembly in the lowered position;
Figure 4 is another perspective view, analogous to that shown in Figure 3, and shows the dose-carrier assembly in the raised position;
Figure 5 is an exploded perspective view of parts of the machine shown in the preceding figures;
Figure 6 is a perspective view of a dose-carrier assembly for a machine according to the present invention, with an associated cartridge containing substance for the preparation of a beverage;
Figure 7 is a view which shows a first embodiment of guiding grooves or slits for a dose-carrier assembly of a machine according to the invention; and
Figure 8 is a partial perspective view which shows an embodiment variant.

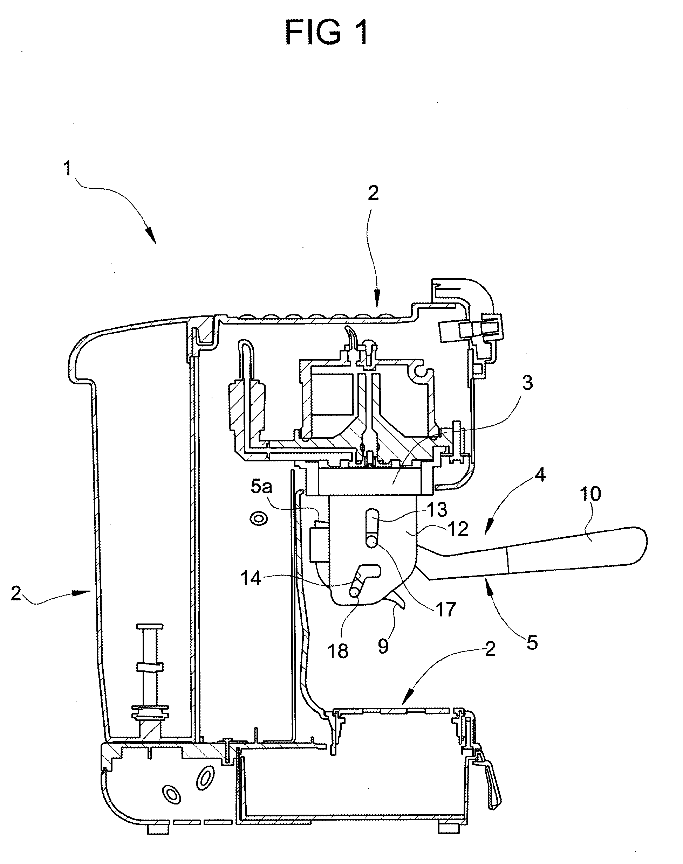

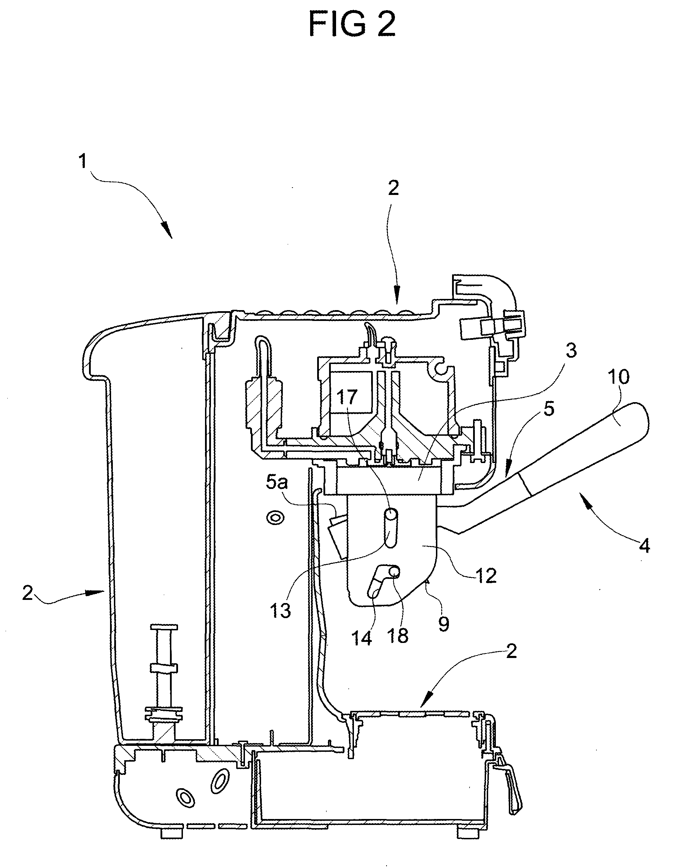

In Figures 1 and 2, 1 overall denotes a machine for the preparation of a beverage according to the present invention.

The machine 1 comprises a fixed support structure, denoted overall by 2, in which there is provided a hot water and/or steam dispensing head 3 of the type known per se. The dispensing head 3 is arranged so as to be at least approximately horizontal. In the present description, as well as in the claims which follow, the expression "approximately horizontal" is intended to mean a structure inclined at most by ±15° in relation to the horizontal plane.

The machine 1 also comprises a movable dose-carrier assembly, denoted overall by 4.

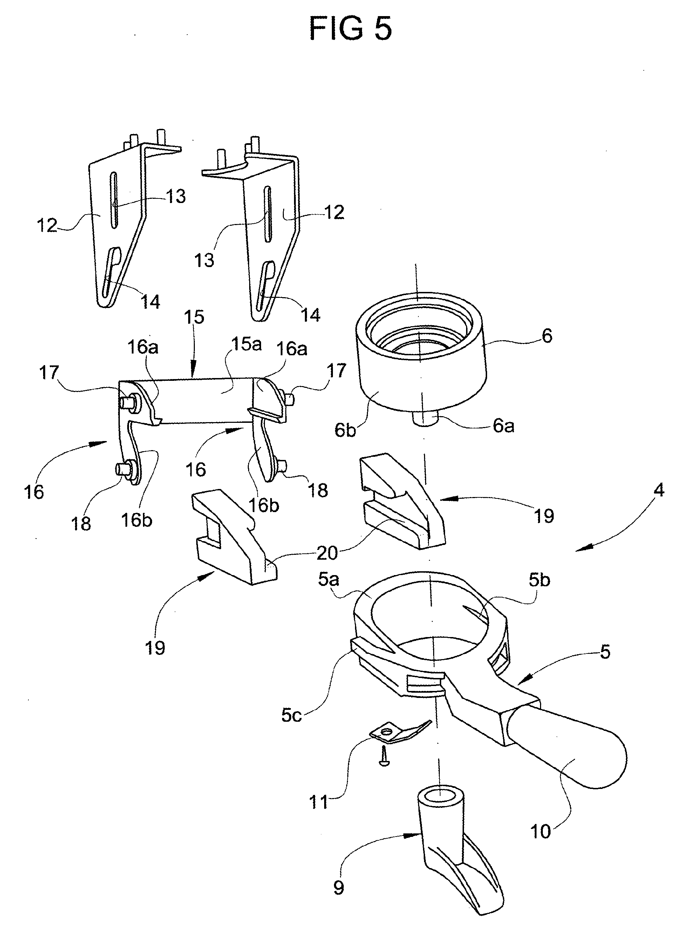

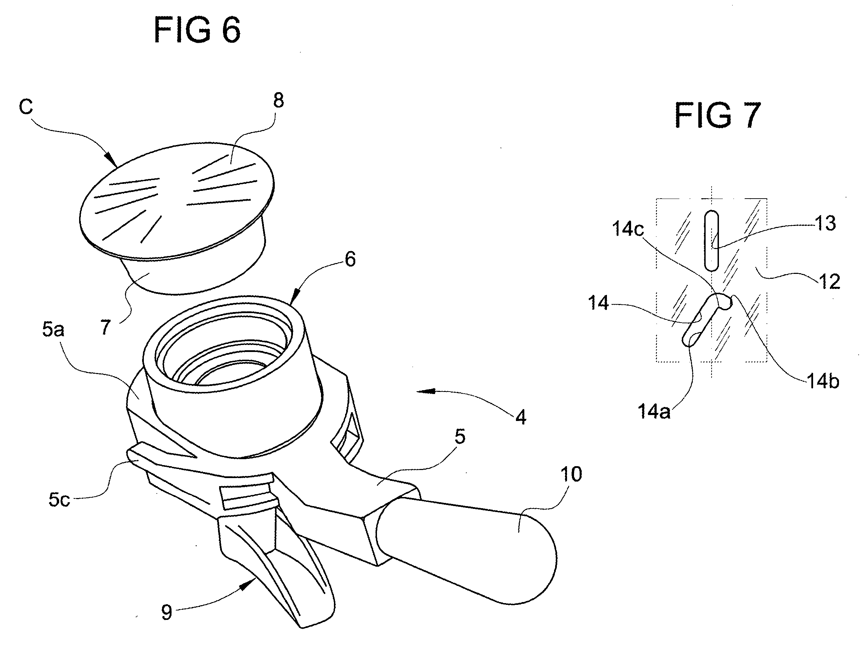

The assembly 4 comprises a grip and control lever member 5 which, as can be seen more clearly in Figures 5 and 6, has a first, essentially annular end part 5a, in which an essentially cup-shaped dose-carrier body 6 is mounted.

The dose-carrier body 6 is adapted to internally receive a capsule or cartridge C (Figure 6) which, in the embodiment shown by way of example, comprises a cup-shaped body 7 closed sealingly at the top by a tearable lid 8.

The inside of the capsule C contains a substance for the preparation of a beverage, in particular ground roasted coffee, in view of the preparation of, for example, what is known as an Italian-style espresso coffee. The capsule C is expediently, though not necessarily, of the type described and shown in European Patent EP 1 886 942 B1, in the name of the same applicant.

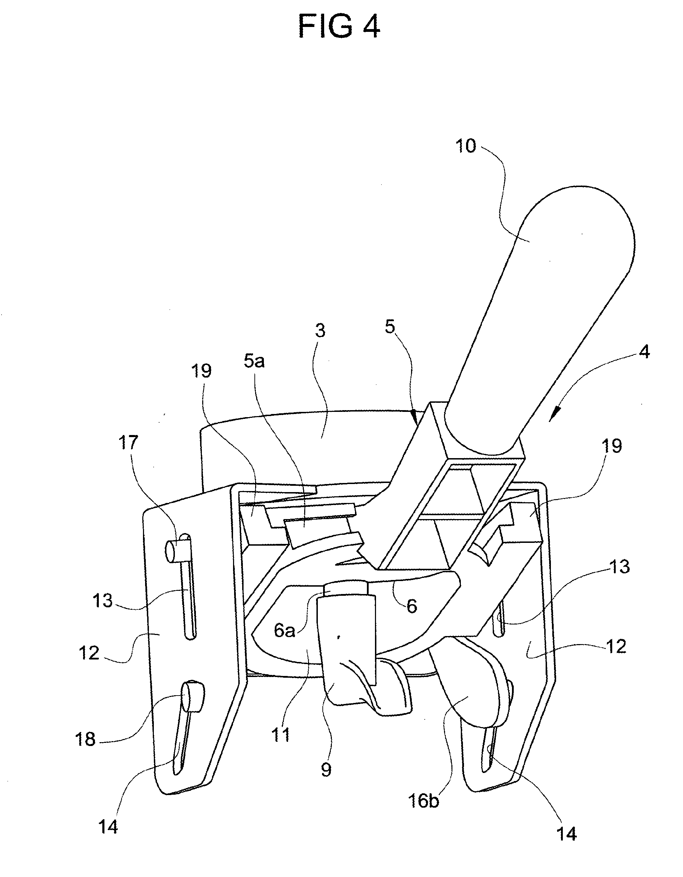

At the bottom, the cavity of the dose-carrier body 6 is in communication with a passage formed in a tubular end piece 6a of the latter (Figures 4 and 5), a pouring spout 9 being engaged on said end piece.

The dose-carrier body 6 has a pair of opposite cylindrical pins 6b (of which only one can be seen in Figure 5) which engage in corresponding, essentially semicylindrical seats 5b in the lever member 5. The body 6 extends with play inside the opening defined in the annular part 5a of the lever member 5, in a manner such that said body 6 is oscillatable in a limited angular range (of, for example, about 30°), about an essentially horizontal axis (defined by its pins 6b and by the associated seats 5b).

On the opposite side from the annular part 5a, the grip and control lever member 5 forms a handle, denoted by 10. As will become more apparent from the text which follows, said handle can be operated manually by a user to move the dose-carrier assembly 4 between the lowered position shown in Figure 1, in which the dose-carrier body 6 is uncoupled from the dispensing head 3, and the raised position shown in Figure 2, in which the body 6 is sealingly coupled with the head 3 in view of the preparation of a beverage.

With reference to Figure 5, a leaf spring 11 is connected to the bottom and rear of the annular part 5a of the lever member 5; the distal end of said leaf spring, which acts on the base wall of the dose-carrier body 6, tends to cause rotation of the latter about its pins 6b in the direction of the handle 10.

In the embodiment shown by way of example, a pair of parallel facing plates, denoted by 12, are connected to the fixed support structure 2 of the machine 1. In particular, said plates are firmly connected to the dispensing head 3.

In the embodiment according to Figures 1 to 7, the plates 12 extend in respective vertical planes, at least in part below the dispensing head 3, and are provided with respective guiding through-slits or through-grooves 13 and 14 (these can be seen in particular in Figures 1, 2, 4, 5 and 7). However, it may also be the case that said grooves are not through-grooves.

The slits or grooves 13 and 14 of the two plates 12 are the same, facing one another and parallel to one another. In the example according to Figures 1 to 7, the slit or groove 13 of each plate 12 is essentially linear, and at least approximately vertical, whereas the other slit or groove 14 is substantially shaped like a capsized V, with one branch 14a (Figure 7) markedly longer than the other 14b, which points towards the handle 10 of the lever member 5.

A type of hump 14c (Figure 7) is defined between the branches 14a and 14b of the slits or grooves 14.

In the embodiment shown, a carriage 15, which can be seen more easily in Figure 5, is associated with the dose-carrier assembly 4. Said carriage has an essentially horizontal crosspiece 15a, from the ends of which respective, essentially V-shaped formations 16 extend, forming respective upper arms 16a and respective lower arms 16b.

The upper arms 16a of the carriage 15 are provided with respective, externally protruding horizontal formations, which are essentially in the form of pegs 17 and are horizontally aligned with respect to one another and opposing each other with respect to an intermediate vertical plane orthogonal to the crosspiece 15a. Analogously, the arms 16b of the carriage 15 are provided with respective protruding horizontal formations in the form of pegs 18, these also being horizontally aligned and opposing each other with respect to the intermediate vertical plane of the carriage. Each formation 16 of the carriage 15 is therefore provided with a respective pair of protruding horizontal pegs 17 and 18, which are engaged guidedly and slidingly in the slits or grooves 13 and 14 of a corresponding plate 12.

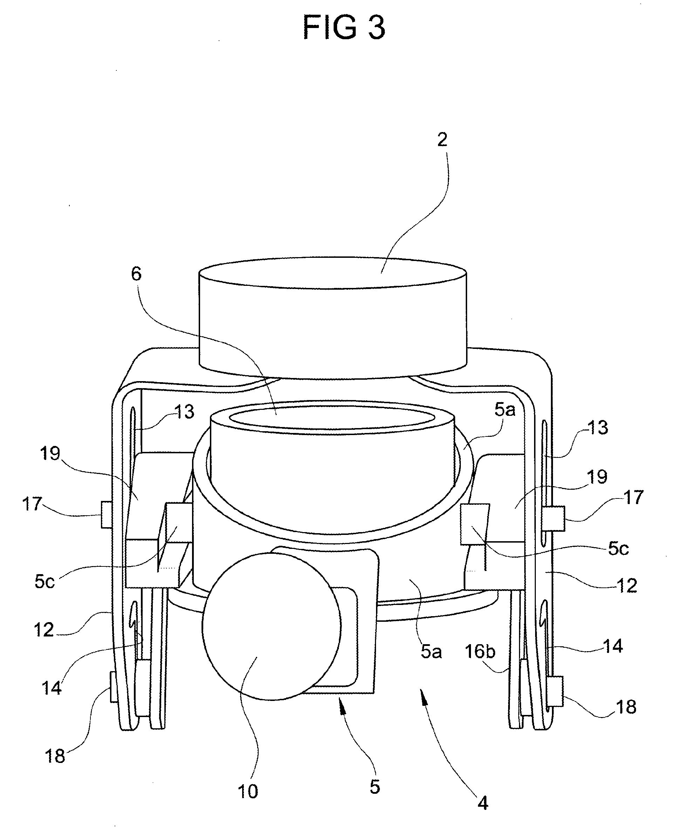

With reference in particular to Figures 3 to 5, respective coupling elements 19 are inserted, with prismatic coupling, onto the upper arms 16a of the carriage 15, and these intermediate coupling elements, on the respective facing faces, are provided with seats or grooves 20 into which corresponding projecting lateral formations 5c of the lever member 5 can engage, likewise with prismatic coupling (this can also be seen in Figures 3 and 4).

In embodiment variants which are not shown, the intermediate coupling members 19 may be produced in only one piece with the carriage 15, or in only one piece with the grip and control lever member 5.

In further embodiments which are not shown, the carriage 15 and the elements 19 may be produced in only one piece with the grip and control lever member 5.

The slits or grooves 13 and 14 may possibly be produced so as to be in communication or rather so as to represent two parts of a single slit or groove.

In addition, said slits or grooves may be equipped with respective cut-outs or openings allowing the protruding pegs 17 and 18 to pass therethrough and disengage therefrom, for disengaging the entire dose-carrier assembly 4 from the fixed structure 2 of the machine 1.

With reference once again to the embodiment shown in Figures 1 to 7, the dose-carrier assembly 4 is manually displaceable from the position shown in Figure 1, in which the dose-carrier body 6 is uncoupled from the dispensing head 3, towards the coupling position shown in Figure 2, in which the body 6 is coupled to the head 3, by means of an upward manual displacement of the handle 10 thereof, essentially in a vertical plane, along an arcuate path having its concavity facing the dispensing head 3.

As has already been mentioned, the slits or grooves 14 are shaped such as to define, for the two homologous protruding pegs 18 of the carriage 15, a path which, close to the coupling position of the dose-carrier assembly 4 with the dispensing head 3, forms a hump, denoted by 14c in Figure 7. Said hump can be overcome by interference on the part of the pegs 18 to allow the dose-carrier assembly 4 to reach and be stabilized in said coupling position soon after. Owing to this feature, the pressure exerted by the hot water and/or by the steam subsequently injected in the capsule C housed in the dose-carrier assembly 4 is unable to bring about premature uncoupling of said assembly from the dispensing head 3.

Once the beverage has been dispensed, the user can then manually uncouple the dose-carrier assembly 4 from the dispensing head 3 by acting on the handle 10 of said assembly, said hump 14c is initially overcome backwards, and then the procedure carried out beforehand is retraced inversely by displacing the handle 10 downwards.

Once the uncoupling position shown in Figures 1 and 3 has been reached, the user can disengage the dose-carrier assembly 4, releasing it from the carriage 15, to allow the exhausted capsule C to be removed and possibly replaced with a new capsule C in view of the preparation of a fresh beverage, in particular of a fresh espresso coffee.

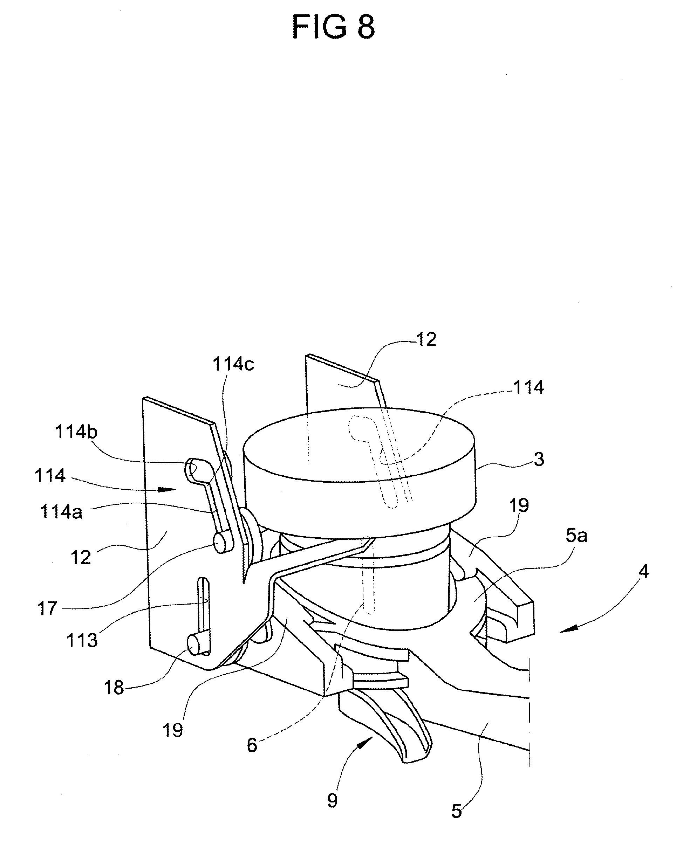

Figure 8 is a partial view of an embodiment variant. In this figure, the same reference numerals as those used before have again been given to parts and elements which are the same as or substantially equivalent to parts which have already been described.

In the variant according to Figure 8, each of the facing plates 12 is provided with an essentially linear lower slit or groove 113 which is preferably vertical, and an above-lying, second slit or groove 114 essentially shaped like a capsized V, with one branch 114b markedly shorter than the other one 114a. The short branch 114b points away from the handle 10 of the grip and control lever member 5.

Expediently, in the embodiment according to Figure 8, too, a type of hump 114c is defined between the two branches 114a and 114b of the slit or groove 114, it being possible to overcome said hump by interference on the part of the corresponding peg 17 of the carriage 15 when the dose-carrier assembly 4 is close to reaching the coupling position with the dispensing head 3.

Otherwise, the variant shown in Figure 8 corresponds essentially to that described above.

In all of the embodiments shown in the drawings, the dose-carrier assembly 4 is movable, relative to the fixed support structure 2, along guide means which comprise two pairs of protruding formations 17, 18 predisposed on said assembly, and at least one corresponding pair of slits or grooves 13, 14 predisposed in the fixed support structure 2. However, the scope of the present invention encompasses embodiments (not shown here) in which the protruding formations or pegs are predisposed in the fixed support structure 2 of the machine, whereas associated guiding slits or grooves are predisposed on the movable dose-carrier assembly 4.

Clearly, without affecting the principle of the invention, the embodiments and the design details may differ considerably from those described and illustrated purely by way of non-restrictive example, without thereby departing from the scope of the invention as defined in the accompanying claims.

## Claims

1. Machine for the preparation of a beverage, comprising
a fixed support structure (2) in which there is provided an at least approximately horizontal hot water and/or steam dispensing head (3) and
a movable dose-carrier assembly (4) including a grip and control lever member (5), which at one first end (5a) is provided with a receptacle (6) adapted to receive a pre-packaged dose (C) of a substance for the preparation of the beverage, like a cartridge or capsule (C), and which at its other or second end is provided with a handle (10) manually operable to move said assembly (4) with respect to said structure (2) between a position in which it is sealingly coupled with the dispensing head (3) and an uncoupling position, through guide means (13, 14; 17, 18) which comprise first and second cooperating means predisposed in the dose-carrier assembly (4) and in the fixed structure (2), respectively, or vice versa,
the machine (1) being **characterized in that** the first guide means (17, 18) comprise first and second pairs of protruding horizontal formations (17, 18), which are horizontally aligned and opposing each other with respect to an intermediate vertical plane, and
the second guide means (13, 14) comprise at least one pair of facing and parallel slits or grooves (13, 14), which extend in respective vertical planes on opposite sides with respect to said intermediate vertical plane and in which said protruding formations (17, 18) of the first and second pairs are guidedly and slidingly engaged;
said slits or grooves (13, 14) being shaped such that the dose-carrier assembly (4) is manually displaceable from the uncoupling position towards the coupling position by means of an upward displacement of the handle (10) thereof, essentially along an arcuate path having its concavity facing the dispensing head (3).

2. Machine according to Claim 1, wherein the dose-carrier assembly (4) is engageable/disengageable in/from a movable carriage (15) which is provided with said first or second guide means, coupled to said second or first guide means of said fixed structure (2); in the engaged condition the dose-carrier assembly (4) being movable, together with said carriage (15), with respect to the fixed structure (2) between said coupling and uncoupling positions.

3. Machine according to Claim 1, wherein said slits or grooves (13, 14) have respective openings or cut-outs allowing the corresponding protruding formations (17, 18) to pass therethrough and disengage therefrom, for disengaging the dose-carrier assembly (4) from said fixed structure (2).

4. Machine according to one of the preceding claims, wherein said protruding formations (17, 18) are associated with the movable dose-carrier assembly (4), and said slits or grooves (13, 14; 113, 114) are provided in a pair of parallel facing plates (12) which are fixed to said fixed structure (2) and extend at least in part below the dispensing head (3).

5. Machine according to Claim 4, wherein said slits or grooves (13, 14; 113, 114) are shaped such as to define, for two horizontally aligned corresponding protruding formations (18; 17), a path which, close to the coupling position of the dose-carrier assembly (4) with the dispensing head (3), forms a hump (14c; 114c) which can be overcome by interference for reaching said coupling position.

6. Machine according to Claim 4 or 5, wherein each of said plates (12) has a first, essentially linear slit or groove (13; 113) which is preferably vertical, and a second slit or groove (14; 114) essentially shaped like a capsized V, with one branch (14b; 114b) markedly shorter than the other one (14a; 114a).

7. Machine according to Claim 6, wherein the first slit or groove (13) extends vertically above the second slit or groove (14), and the shorter branch (14b) of the latter points towards the handle (10) of the lever member (5) of the dose-carrier assembly (4).

8. Machine according to Claim 6, wherein the first slit or groove (113) extends vertically below the second slit or groove (114), and the shorter branch (114b) of the latter points away from the handle (10) of the lever member (5) of the dose-carrier assembly (4).

9. Machine according to any one of the preceding claims, wherein said first end (5a) of the lever member (5) is provided with a dose-carrier body (6) in which there is formed said receptacle; said dose-carrier body (6) being connected to the lever member (5) in a manner oscillatable in a limited angular range, about an essentially horizontal axis; resilient means (11) being provided, which tend to cause rotation of the dose-carrier body (6) about said axis, towards the handle (10) of the lever member (5).

## Patentansprüche

1. Maschine für die Zubereitung eines Getränks, die folgende Merkmale aufweist:
eine feststehende Stützstruktur (2), bei der ein zumindest ungefähr horizontaler Heißwasser- und/oder Dampfspendekopf (3) vorgesehen ist, und
eine bewegbare Dosisträgeranordnung (4), die ein Griff- und Steuerhebelbauglied (5) umfasst, das an einem ersten Ende (5a) mit einem Behältnis (6) versehen ist, das dazu angepasst ist, eine vorabgepackte Dosis (C) einer Substanz für die Zubereitung des Getränks wie eine Kartusche oder Kapsel (C) aufzunehmen, und das an seinem anderen oder zweiten Ende mit einer Handhabungsvorrichtung (10) versehen ist, die manuell bedienbar ist, um die Anordnung (4) durch Führungseinrichtungen (13, 14; 17, 18), die eine erste und eine zweite Kooperationseinrichtung aufweisen, die in der Dosisträgeranordnung (4) beziehungsweise in der feststehenden Struktur (2), oder umgekehrt, vorab angeordnet sind, bezüglich der Struktur (2) zwischen einer Position, in der sie auf abdichtende Weise mit dem Spendekopf (3) gekoppelt ist, und einer Entkopplungsposition zu bewegen,
wobei die Maschine (1) **dadurch gekennzeichnet ist, dass** die erste Führungseinrichtung (17, 18) ein erstes und ein zweites Paar vorspringender horizontaler Formationen (17, 18) aufweist, die horizontal ausgerichtet sind und einander bezüglich einer dazwischen liegenden vertikalen Ebene gegenüberliegen, und
die zweite Führungseinrichtung (13, 14) zumindest ein Paar einander zugewandeter und paralleler Schlitze oder Rillen (13, 14) aufweist, die sich bezüglich der dazwischen liegenden vertikalen Ebene auf gegenüberliegenden Seiten in jeweiligen vertikalen Ebenen erstrecken und in denen vorspringende Formationen (17, 18) des ersten und des zweiten Paars auf geführte und gleitende Weise in Eingriff genommen sind;
wobei die Schlitze oder Rillen (13, 14) derart geformt sind, dass die Dosisträgeranordnung (4) mittels einer Aufwärtsverschiebung der Handhabungsvorrichtung (10) derselben manuell von der Entkopplungsposition zu der Kopplungsposition verschiebbar ist, im Wesentlichen entlang eines bogenförmigen Pfads, dessen Höhlung dem Spendekopf (3) zugewandt ist.

2. Maschine gemäß Anspruch 1, bei der die Dosisträgeranordnung (4) in einen/aus einem bewegbaren Wagen (15) in Eingriff/außer Eingriff gebracht werden kann, der mit der ersten oder zweiten Führungseinrichtung versehen ist, mit der zweiten oder der ersten Führungseinrichtung der feststehenden Struktur (2) gekoppelt ist; wobei die Dosisträgeranordnung (4) in dem Ineingriffnahmezustand zusammen mit dem Wagen (15) bezüglich der feststehenden Struktur (2) zwischen der Kopplungs- und der Entkopplungsposition bewegbar ist.

3. Maschine gemäß Anspruch 1, bei der die Schlitze oder Rillen (13, 14) jeweilige Öffnungen oder Aussparungen aufweisen, die ermöglichen, dass die entsprechenden vorspringenden Formationen (17, 18) durch dieselben hindurch gelangen und von denselben außer Eingriff gelangen, um die Dosisträgeranordnung (4) von der feststehenden Struktur (2) außer Eingriff zu bringen.

4. Maschine gemäß einem der vorhergehenden Ansprüche, bei der die vorspringenden Formationen (17, 18) der bewegbaren Dosisträgeranordnung (4) zugeordnet sind und die Schlitze oder Rillen (13, 14; 113, 114) in einem Paar paralleler, einander zugewandter Platten (12) vorgesehen sind, die an der feststehenden Struktur (2) befestigt sind und sich zumindest teilweise unterhalb des Spendekopfs (3) erstrecken.

5. Maschine gemäß Anspruch 4, bei der die Schlitze oder Rillen (13, 14; 113, 114) so geformt sind, dass sie für zwei horizontal ausgerichtete entsprechende vorspringende Formationen (18; 17) einen Pfad definieren, der nahe bei der Kopplungsposition der Dosisträgeranordnung (4) mit dem Spendekopf (3) einen Höcker (14c; 114c) bildet, der durch Interferenz überwunden werden kann, um die Kopplungsposition zu erreichen.

6. Maschine gemäß Anspruch 4 oder 5, bei der jede der Platten (12) eine(n) erste(n), im Wesentlichen lineare(n) Schlitz oder Rille (13; 113) aufweist, der beziehungsweise die vorzugsweise vertikal ist, und eine(n) zweite(n) Schlitz oder Rille (14; 114) aufweist, der beziehungsweise die im Wesentlichen wie ein umgekehrtes V geformt ist, wobei ein Schenkel (14b; 114b) deutlich kürzer ist als der andere (14a; 114a).

7. Maschine gemäß Anspruch 6, bei der sich der erste Schlitz oder die erste Rille (13) vertikal über dem zweiten Schlitz oder der zweiten Rille (14) erstreckt und der kürzere Schenkel (14b) des beziehungsweise der letzteren zu der Handhabungsvorrichtung (10) des Hebelbauglieds (5) der Dosisträgeranordnung (4) zeigt.

8. Maschine gemäß Anspruch 6, bei der sich der erste Schlitz oder die erste Rille (113) vertikal unter dem zweiten Schlitz oder der zweiten Rille (114) erstreckt und der kürzere Schenkel (114b) des beziehungsweise der letzteren weg von der Handhabungsvorrichtung (10) des Hebelbauglieds (5) der Dosisträgeranordnung (4) zeigt.

9. Maschine gemäß einem der vorhergehenden Ansprüche, bei der das erste Ende (5a) des Hebelbauglieds (5) mit einem Dosisträgerkörper (6) versehen ist, in dem das Behältnis gebildet ist; wobei der Dosisträgerkörper (6) mit dem Hebelbauglied (5) derart verbunden ist, dass er in einem begrenzten Winkelbereich um eine im Wesentlichen horizontale Achse schwingt; wobei elastische Einrichtungen (11) vorgesehen sind, die tendenziell eine Drehung des Dosisträgerkörpers (6) um die Achse hin zu der Handhabungsvorrichtung (10) des Hebelbauglieds (5) bewirken.

## Revendications

1. Machine de préparation d'une boisson, comprenant
une structure de support fixe (2) dans laquelle est placé une tête de distribution de vapeur et/ou d'eau chaude (3) au moins approximativement horizontale et
un ensemble de support de dose (4) mobile incluant un élément de levier de saisie et de commande (5), qui en une première extrémité (5a) est pourvu d'un réceptacle (6) adapté pour recevoir une dose pré-emballée (C) d'une substance pour la préparation de la boisson, comme une cartouche ou une capsule (C), et qui en son autre ou seconde extrémité est pourvu d'une poignée (10) pouvant être actionnée manuellement pour déplacer ledit ensemble (4) par rapport à ladite structure (2) entre une position dans laquelle il est couplé de manière étanche avec la tête de distribution (3) et une position de découplage, par des moyens de guidage (13, 14; 17, 18) qui comprennent des premier et second moyens de coopération prédisposés dans l'ensemble de support de dose (4) et dans la structure fixe (2), respectivement, ou vice versa,
la machine (1) étant **caractérisée en ce que** les premiers moyens de guidage (17, 18) comprennent des première et seconde paires de formations saillantes (17, 18) horizontales, qui sont alignées horizontalement et se faisant face relativement à un plan vertical intermédiaire, et
les seconds moyens de guidage (13, 14) comprennent au moins une paire de fentes ou rainures (13, 14) se faisant face et parallèles, qui s'étendent dans des plans verticaux respectifs sur des côté opposés par rapport au dit plan vertical intermédiaire et dans lesquelles lesdites formations saillantes (17, 18) des première et seconde paires sont en prise de manière guidée et coulissante ;
lesdites fentes ou rainures (13, 14) étant formées de telle manière que ledit ensemble de support de dose (4) peut être déplacé manuellement de la position de découplage vers la position de couplage au moyen d'un déplacement vers le haut de la poignée de celui-ci, sensiblement le long d'un chemin arqué ayant sa concavité dirigée vers la tête de distribution (3).

2. Machine selon la revendication 1, dans laquelle l'ensemble de support de dose (4) peut venir en prise dans un/hors de prise d'un chariot mobile (15) qui est pourvu desdits premier et second moyens de guidage, couplés aux dits premier et second moyens de guidage de ladite structure fixe (2) ; dans l'état en prise l'ensemble de support de dose (4) étant mobile, conjointement avec ledit chariot (15), par rapport à la structure fixe (2) entre lesdites positions de couplage et de découplage.

3. Machine selon la revendication 1, dans laquelle lesdites fentes ou rainures (13, 14) ont des ouvertures ou des découpes respectives permettant aux formations saillantes (17, 18) correspondantes de passer à travers elles et de venir hors de prise d'elles, pour faire venir l'ensemble de support de dose (4) hors de prise de ladite structure fixe (2).

4. Machine selon l'une quelconque des revendications précédentes, dans laquelle lesdites formations saillantes (17, 18) sont associées avec l'ensemble de support de dose (4) mobile, et lesdites fentes ou rainures (13, 14; 113, 114) sont placées dans une paire de plaques opposées (12) parallèles qui sont fixée sur ladite structure fixe (2) et s'étendent au moins en partie sous la tête de distribution (3).

5. Machine selon la revendication 4, dans laquelle lesdites fentes ou rainures (13, 14; 113, 114) sont formées de façon à définir, pour deux formations saillantes (17, 18) correspondantes alignées horizontalement, un chemin qui, près de la position de couplage de l'ensemble de support de dose (4) avec la tête de distribution (3), forment une bosse (14c; 114c) qui peut être franchie par interférence pour atteindre ladite position de couplage.

6. Machine selon la revendication 4 ou 5, dans laquelle chacune desdites plaques (12) a une première fente ou rainure (13; 113) sensiblement linéaire qui est de préférence verticale, et une seconde fente ou rainure (14; 114) en forme de V renversé, avec une branche (14b; 114b) plus courte de manière marquée que l'autre (14a; 114a).

7. Machine selon la revendication 6, dans laquelle la première fente ou rainure (13) s'étend verticalement au-dessus de la seconde fente ou rainure (14), et la branche la plus courte (14b) de cette dernière pointe vers la poignée (10) de l'élément de levier (5) de l'ensemble de support de dose (4).

8. Machine selon la revendication 6, dans laquelle la première fente ou rainure (113) s'étend verticalement sous la seconde fente ou rainure (114), et la branche la plus courte (14b) de cette dernière pointe vers la direction opposée à la poignée (10) de l'élément de levier (5) de l'ensemble de support de dose (4).

9. Machine selon l'une quelconque des revendications précédentes, dans laquelle ladite première extrémité (5a) de l'élément de levier (5) est pourvue d'un corps de support de doses (6) dans lequel est formé ledit réceptacle ; ledit corps de support de doses (6) étant relié à l'élément de levier (5) de façon à pouvoir osciller dans une plage angulaire limitée, autour d'un axe sensiblement horizontal ; des moyens élastique (11) étant fournis, qui tendent à provoquer une rotation du corps de support de doses (6) autour dudit axe, vers la poignée (10) de l'élément de levier (5).
